# EUROPEAN PATENT SPECIFICATION

(11) **EP 0 303 652 B1**
(45) Date of publication and mention of the grant of the patent: **18.08.1993**
(21) Application number: 88901814.9
(22) Date of filing: 12.02.1988
(51) Int. Cl.: C05F 9/02, C05F 9/04

(54) **METHOD AND PLANT FOR COMPOSTING**
VERFAHREN UND ANLAGE ZUM KOMPOSTIEREN
PROCEDE ET INSTALLATION DE COMPOSTAGE

(30) Priority: 19.02.1987 DK 854/87; 13.05.1987 DK 2442/87
(43) Date of publication of application: 22.02.1989
(73) Proprietor: RASMUSSEN, Hans Moller, DK-5230 Odense M (DK); ANDERSEN, Niels, DK-5270 Odense N (DK)
(72) Inventor: RASMUSSEN, Hans Moller, DK-5230 Odense M (DK); ANDERSEN, Niels, DK-5270 Odense N (DK)
(86) International application number: DK8800021
(87) International publication number: WO8806148

(56) References cited:
- EP-A- 229 927
- DE-A- 2 315 705
- DE-A- 2 709 715
- DE-B- 2 053 610
- DE-C- 430 821
- DE-C- 2 809 344
- GB-A- 787 983

## Description

This application relates to a method of composting fibrous organic material, such as straw being finely divided and wetted with an aqueous solution or a suspension containing growth-stimulating nutrients such as liquid animal manure, and being deposited, where atmospheric air is passed through, and a plant for carrying out the method.

Earlier, farming was mixed comprising plant cultivation as well as animal breeding, and for thousands of years straw and manure were transformed by socalled composting, i.e. straw and manure were accumulated in closed or open dungheaps. The admission of more or less air would compost this accumulated amount of waste material in the course of a few month to a small or large degree, and the finished compost could then be removed and used as fertilizer on the farmland.

The increasing specialization within modern farming involves division into different types of farming, such as merely plant cultivation, farms with large herds of pigs and farms with large herds of cattle.

In pure plant growing farming there will be an excess of plant material, such as straw, which will often be seen as a waste product, and consequently, such straw is often burned in the field because this is the cheapest way of getting rid of the straw. The burning of straw partly causes environmental problems, and secondly the straw will not form an integral part of the cycle in Nature by natural decomposition. It may therefore be feared that the lack of biological decomposition in the ground in the long run will be harmful to the structure of the soil.

In areas with large animal production there is often merely a large production of manure. This production of manure is so large that it is undesirable to spread it over the ground, because this may cause nitrate pollution of the subsoil water. It will therefore be desirable to sell or dispose of excess manure to areas with small or no cattle herds. This would mean that the animal manure could be better utilized because there would be types of plant cultivation, that would benefit from the animal manure. However, this is only rarely the case since it is not an economical proposition.

Due to increasing concern in the highly developed countries at environmental consequences of the increasing quantities of organic waste, an increasing number of countries have taken an interest in using composting as a method of treating organic waste, and it would be obvious to apply the same method as earlier farmers have used for thousands of years, i.e. to compost the straw and manure.

Composting, however, involves the risk of spreading infectious bacteria and parasites present in the manure.

These are characteristic in that they thrive at fairly low temperatures up to about 40 C. Other bacteria present in the waste products, allthough in a position of rest, thrive at considerably higher temperatures and are therefore known as thermophilic bacteria. It is seen from the technical literature that an increased temperature of the compost will reduce or completely destroy a number of pathogenic bacteria, and that parasites, their eggs as well as weed seeds become inactive or are killed when staying at a sufficiently high temperature and at a suitable hydrogen ion exponent (pH).

It is the object of the invention to secure optimum growth conditions for the thermophilic bacteria, and this is achieved by a method where the fibre material is wetted with a liquid quantity corresponding to approximately 4 times the weight of the fibre material.

This ensures that without supplying heat from external heat sources a temperature is produced in the mixture which is high enough for infectious matter and parasites to be destroyed to a very high degree without damaging or killing such bacteria as serve to enhance the decomposition; this process can hereby become self-controlling.

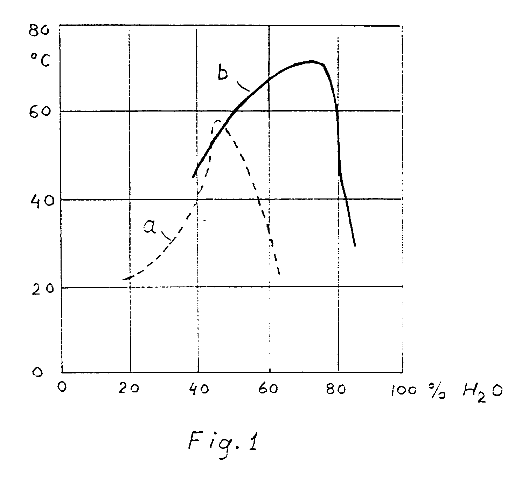

DE-A-28 09 344 might from a superficial point of view seem to show, that a composting reactor described intends to solve this same problem from similar criteria. However, as is seen from description as well as fig. 1 of said document, great emphasis is attached to highly complicated and interconnected automatic control systems complete with transducers. One controller 38 measures in the least carbondioxide concentration, humidity and temperature, based on which measurements a humidifier 15 through which intake air is drawn and water is added is to be controlled. Simultaneously, but independently, another controller measures exhaust air temperature and controls the exhaust blower 21. Water from the water separator 24 is recirculated to the aforementioned humidifier 15.

Such activities as take place in a volume of organic material being composted necessarily have large time delays and long time constants, and often change of conditions such as temperature or carbondixide release may last for several hours. Consequently control system parameters will have to be adjusted to values that in practice are extremely difficult to achieve.

DE-A-20 53 610 similarly describes a composting reactor, which according to text employs several automatic control systems, not shown, however, in the accompanying illustrations.

These control systems measure and control the composting conditions, such as temperature, carbon dioxide concentration, humidity and level of material in the the reactor. Spraying of water, solutions of ammoniumsulphate or other nitrogen-carrying substance as well as air-flow and -suction are controlled by these systems.

That a maximum of 65 degree Celcius is never to be exceeded is in this document declared as being important for the composting process.

Regarding the various control systems recommended same reservations as above are taken.

DE-A-27 09 715 describes a composting reactor, where one of the temperature control methods employed is the spraying of the compost with CaO - calcium oxide. It is mentioned, however, that the amount of CaO is dependent of knowledge of the humidity of the compost material, and therefore humidity apparently is measured continously.

As the spraying of CaO is used to increase reaction temperature, this means that also temperature must be measured continously.

Under other circumstances water is added through spray nozzles, however it is not described how this spraying is controlled.

As no control systems are particularly mentioned, it is assumed, that the proces is either manually controlled, or that a complicated automatic control system must be connected to the reactor.

In both cases the reservations taken regarding this document are similar to the former reservations, and in the following description is in contrast hereto demonstrated the invention of a fully automatically controlled composting process.

By passing the fibre material through a liquid drop zone the optimum adsorption of liquid for the fibre materiel is obtained.

By having the fibre material drop down into the liquid drop zone and therefrom rain down unto the surface of the liquid being recycled, a simple and efficient wetting of the fibre material is obtained.

Finally it is expedient to use the plant presented in claim 3 in that this can be made self-controlling in a simple and expedient manner.

In the following the invention will be described in closer detail with reference to the drawing which shows a section through an embodiment of a wetting and composting plant according to the application.

Research results show that there is a clear connection between the decomposition temperature of compost and its liquid content. Thus, animal manure mixed with straw has a clear temperature maximum of approximately 70-72 C at a narrow field of only about 5 percentage points, when the moisture degree of the material is between 75 and 80 percent liquid content.

This relationship is illustrated in Fig. 1, the data of which are from Baader after H. Schulz. "Warmegewinnung bei der Festmistkompostierung", Bayr. Ministerium fur Ernahrung, Landwirtschaft und Forsten (Hrsg.) 1982.

The composting temperature, that is, the temperature, which is reached in a large mass of material suitable for composting, has a clear maximum of app. 70 degree Celcius around 75-80 percent humidity.

Consequently, a liquid content corresponding thereto should be aimed at in order to obtain the largest possible effect on infectious bacteria end parasites.

Tests with straw from barley and other ordinary grains have shown that straw can absorb up to 4-5.5 times its own weight of waterbased liquid, for instance liquid animal manure or other liquid such as water.

Test have moreover established the fact that the water capacity of farmyard manure depends on the straw content and the homogenity. Good homogeneous straw-mixed farmyard manure can thus hold op to 80 percent of water without loosing it's structure. (Vemmelund, N. and Berthelsen, L., Denmark 1983)

The moisture content by adsorption of four times the weight of the straw corresponds to 80 percent, and 5.5 times the weight of the straw corresponds to 85 percent water.

The connection shown between on the one hand the fact that the maximum temperature is reached at a water content of about 75-80 percent, and on the other side the discovery that straw can absorb and hold about 4-5.5 times its own weight of thin liquid manure, is according to the invention utilized for automatically ensuring maximum temperature and minimum flow time for a continous composting process of solid or liquid manure and straw mix.

One decisive factor is that the straw, prior to initiating the composting process, has had the opportunity to absorb the maximum quantity of manure, perhaps with water added.

It is a know fact, however, that wetting of already dry plant material can be extremely difficult to perform. It should be remembered that dried plant material has been used as an effective thatching material. Examples are leaves and branches of palm trees, chips of wood, grass straw and the like.

The point is that one uses the physical property that the adsorption of water to a surface often happens much faster than does absorption, not to speak of dissolution.

The reason for this is to be found in the stability of the dry dead plant cells, membranes etc.

By applying various physical cutting methods, dried plant material such as straw can be finely divided whereby the material is given a large surface which is one of the most important prerequisites for a high adsorption of molecules of aqueous solutions or suspensions which in turn is ascribed to the polar nature of the water molecule.

By spraying the water-based liquid, such as liquid animal manure or a slurry thereof, over the suitably finely divided straw material during its free fall whereby it rains down onto a liquid surface, it can be collected from this liquid surface by using suitable technical means, such as a conveyor, and be conveyed to the composting plant.

By suitable construction of nozzles, quantities of falling straw material and suitable recirculation of the manure, the wetting is adjusted to extend across suitably formed wetting zones whereby a required homogenous spreading of the falling material is also achieved in order that it is homogenous and suited for composting.

A further condition is that the wetted straw is positioned so as to be suitably aired.

If this requirement is also met, the humidity of the composting material will remain at the earlier described maximum of 80% and consequently the composting will take place at maximum speed and a temperature of 70 - 72 degree Celcius.

A plant for carrying out the method must therefore merely be able to meet these two requirements in order to automatically achieve, that pathogenous bacteria and parasites with certainty are destroyed or killed so the finished compost product leaving the process will contain only such organic matter as is harmless and as will benefit agriculture.

The necessary adjustment or control of a fully automatic plant for serving the purpose can in principle thus be reduced to controlling that the material undergoes the two decisive processes, i.e. wetting and airing.

Automatic control of the temperature is thus rendered unnecessary in that this is now determined solely by the biological activity.

In a technical plant constructed along these two criteria it is thus possible to limit the measuring and controlling highly, because the operation temperature will be in a pre-determined narrow area.

As a consequence of this method such a plant will in principle be controllable by a simple sequence control or clockwork timing device, which merely ensures conveyancing of the material.

This provides a simplification and improves the reliability of the operation, which considerably reduces the cost of technical plants for composting waste.

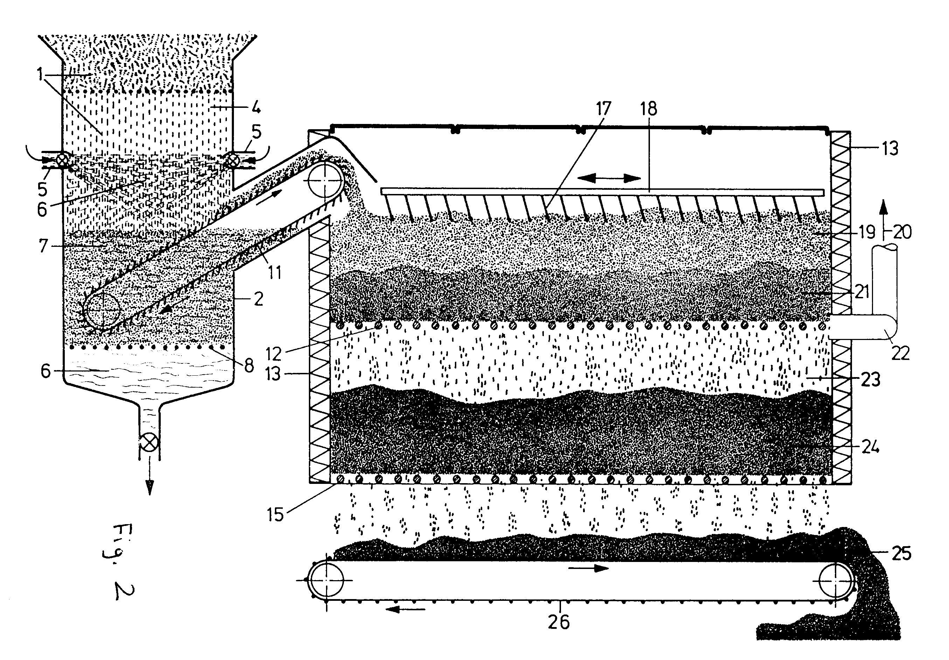

The example shown in the drawing fig. 2 of an embodiment of a plant will now be explained in closer detail.

The finely divided straw 1 is stored in for instance a silo from which it can be delivered through openings 4 and fall through a sprinkler chamber in which liquid manure 6 is injected through nozzles 5.

The straw is hereby wetted completely and is by the manure drops 6 rained down into the reservoir 2 where excess manure 6 is collected under a grating 8 or the like and from there recirculated in a generally known manner.

A conveyor belt 11 being adjustable with respect to transport capacity, carries the mixture 7 to the actual composting plant which comprises a container with heat insulated side walls 13.

The mixture 7 is added to the plant from above and distributed by means of grid bars 17, 18 being moved to and fro.

Furthermore there is a grating 12 situated in the middle of the chamber; an insulating layer is thereby provided above the underlying compost chamber 23. This layer consists of the added material 19 at the top and the more compressed underlying layer 21.

The material 21 will gradually sink through the grating 12 and fall down into the compost chamber 23 on top of an underlying grating 15.

Atmospheric air is sucked through the grating 15 and through the material 24 out through a suction pipe 20, 22 by means of a suitable suction blower.

Once the composting is finished, the material 25 will fall down onto an underlying conveyer belt 26 which can carry away the finished compost material.

Since, as mentioned above, it is necessary that the material has maximum moisture degree and stays in the compost chamber for a suitable period, control means are connected for determining the speed of travel of the conveyor belt 11 and perhaps of the moving gratings 17, 18 so that a continous composting can be maintained merely by adjusting these conveyancing devices in terms of time. This simplifies the control, and the maximum composting speed in the shortest period of transit time is ensured.

## Claims

1. Method of composting fibrous, organic material, such as straw, being finely divided and wetted with an aqueous solution or suspension containing growth stimulating nutrients, such as liquid animal manure, and being deposited in a container with heat insulated side walls (13), where atmospheric air is passed through, **characterized** in that the fibre material is wetted with a liquid quantity corresponding to 4 times the weight of the fibre material, by being passed through a zone of liquid drops (6) in which the fibre material (1) is sprayed, in order to obtain a moisture degree of 80 %, and in that the temperature is maintained at 70 - 72 degrees Celcius and controlled solely by the natural, biological activity of the microorganisms.

2. Process method according to claim 1, **characterized** in that the wetted fibre material is placed in a reactor designed so that material is held in two horizontal layers, the upper layer so placed, that no air may pass down through it from above, the lower layer so placed, that air and gasses may be sucked up from below this layer to a space between these two layers, from which air is sucked by means of a suitable suction blower.

3. Plant for carrying out the method according to claims 1 and 2, **characterized** in that it comprises a supply of finely divided fibre material (1), a sprinkler chamber placed underneath with nozzles (5) for liquid (6), an underlying reservoir (2) for the wetted fibre material (7), a transport device (11) for conveying the fibre material (7) to the compost chambers (19, 23) having heat insulating walls, in the upper part movable grid bars (17, 18) for evenly distributing said material over an upper movable grating (12) and in the lower part a lower movable grating (15), and an air suction pipe (20, 22) connected to a suitable blower.

## Patentansprüche

1. Methode zum Kompostieren von fibrösem, organischem Material, wie Stroh, der feingeteilt wird, und mit einer wässrigen Auflösung oder Aufschlemmung, mit Inhalt von wachstumfördernde Nährstoffen wie flüssigem, animalischem Dünger beenetzt wird, und weiter in einem Behälter mit wärmegedämmten Seitenwänden deponiert wird, wo atmosphärische Luft durchpassieren kann, **dadurch gekennzeichnet**, daß das Fibermaterial mit einer Menge von Flüssigkeit entsprechend 4 Mal das Gewicht von Stroh benetzt wird bei der Passage durch eine Zone von Flüssigheitströpfchen, so daß der Feuchtigkeitsgrad des Materials 80% erreicht, und so daß die Temperatur auf 70 - 72° C festgehalten ist, allein bei der natürlichen, biologischen Aktivität deren Kleinstlebewesen.

2. Prozeß Methode nach Anspruch 1, **dadurch gekennzeichnet**, daß das benetzte Fibermaterial in einen Reaktor angebracht ist, der Reaktor so aufgebaut ist, daß das Material in zwei horizontalen Schichten gehalten ist, die obere Schicht so angebracht, daß keine Luft dadurch hinab von oben passieren kann, die untere Schicht ist so angebracht, daß Luft und Gase hinauf von unten bis zu einem Raum zwischen diesen beiden Schichten gesaugt werden kann, von welchem Raum Luft weiter mittels eines geeignetem Sauggebläses ausgesaugt ist.

3. Anlage oder Vorrichtung für die Durchführung des Prozeßmethodes nach Anspruch 1 und 2, **dadurch ge kennzeichnet**, daß es aus folgenden Hauptteilen besteht: Eine Versorgung von feingeschnittenem Fibermaterial 1, eine Sprühkammer darunter mit Sprühdüsen 5 für Flüssigkeit 6, ein darunter liegendes Reservoir 2 für das benetzte Fibermaterial 7, ein Transportgerät - Conveyer - 11 um das Fibermaterial bis zu den Kompostierungskammern 19, 23 zu bringen, welche Kammern wärmegedammende Seitenwänden haben, im oberen Teil bewegbaren Harkenbalken 17, 18 um dasselbe Material gleichmässig über einem oberen bewegbaren Rost 12 verteilen zu können, und im unteren Teil ein unterer bewegbarer Rost 15, und ein Luftsaugerohr 20, 22 an einem geeigneten Sauggebläse verbunden.

## Revendications

1. Méthode de composter des matériaux fibreaux organiques comme de la paille. étant réduites en parties très menues et mouillée avec une solution aqueuse ou suspension contenant des substances alimentaires que stimulent les croissance, comme du lisier liquide animal, et étant déposé dans un conteneur aux parois isolés de chaleur (13), où de l'air atmosphérique est passé à travers, **caractérisé** par ce que les matériaux de fibres seront mouillés avec une quantité liquide corréspondante à 4 fois le poids des matériaux de fibres, par être transportés à travers une zone de gouttes liquides (6) dans laquelle les matériaux fibreux (1) seront mouillés par vaporisation pour parvenir à un dégré d'humidité de 80 %_{,} et dans ce que la température est maintenue à 70 - 72 ° C et controlée uniquement par l'activité biologique naturelle des microorganismes.

2. La méthode de procès conformement à la demande 1, **caractérisée** par ce que les matériaux fibreux mouillés seront placés dans un réacteur déssiné de manière que les matériaux soient tenus dans deux couches horizontales, la couche de dessus placée de sorte qu'aucun air ne puisse passer en bas par celle de dessus, la couche inferieure placée de manière que l'air et des gaz puissent être sucés en haut de dessous cette couche dans une chambre entre les deux couches, d'où de l'air est sucé par moyens d'un ventilateur d'apiration convenable.

3. Installation pour effectuer la méthode selon les demandes 1 et 2, **caractérisée** par ce qu'elle comprend une fourniture de matériaux de fibres triturés (1), une chambre d'arrosseur placée en dessous avec gicleurs (5) pour liquide (6), un reservoir de dessous (2) pour les matériaux fibreux mouillés (7), un dispositif de transport (11) pour convoyer les matériaux fibreux (7) aux chambres de compost (19, 23) pourvues de parois avec isolement de chaleur, dans la partie supériure des bâtons de grille mobiles (17, 18) pour distribuer à ras lesdites matériaux sur une grille mouvante placée dessus (12) et dans la partie ingerieure une grille mouvante inférieure (15), et un tuyeau d'apiration d'air (20, 20) connecté à un ventilateur convenable.
